# EUROPEAN PATENT SPECIFICATION

(11) **EP 1 041 873 B1**
(45) Date of publication and mention of the grant of the patent: **07.05.2003**
(21) Application number: 98964666.6
(22) Date of filing: 22.12.1998
(51) Int. Cl.: A01K 1/12, A01K 1/00

(54) **AN ARRANGEMENT FOR AND A METHOD OF MANAGING A HERD OF ANIMALS**
EINRICHTUNG UND VERFAHREN ZUR VERWALTUNG EINER TIER HERDE
INSTALLATION ET PROCEDE DE GESTION D'UN TROUPEAU D'ANIMAUX

(30) Priority: 23.12.1997 SE 9704878
(43) Date of publication of application: 11.10.2000
(73) Proprietor: De Laval Holding AB, 147 21 Tumba (SE)
(72) Inventor: SCHULTE, Klaus, S-150 21 Mölnbo (SE)
(74) Representative: Berglund, Stefan
(86) International application number: SE9802435
(87) International publication number: WO99031971

(56) References cited:
- EP-A1- 0 634 097
- EP-A2- 0 647 390
- WO-A1-96/19916
- WO-A2-96/19917
- CA-A- 1 237 031
- GB-A- 2 266 650
- SE-B- 445 872
- SE-B- 462 072

## Description

### THE BACKGROUND OF THE INVENTION AND PRIOR ART

The present invention refers to an arrangement for housing a herd of animals including at least one milk producing animal and at least one milk consuming animal, the arrangement comprising a first area provided to house said milk producing animal and a second area being separated from the first area and provided to house said milk consuming animal said first area comprising a milking station provided for milking of said milk producing animal. Moreover, the invention refers to a method of managing a herd of animals including at least one milk producing animal and at least one milk consuming animal, the method comprising housing said milk producing animal in a first area, performing milking of said milk producing animal in said first area, and housing said milk consuming animal in a second area being separated from the first area.

In the following the milk producing animals are cows and the milk consuming animals are calves. However, the invention is not limited to cows and their calves, but is applicable to any animals having the ability to produce large quantities of milk, such as sheep, goats, buffaloes, horses etc.

It is common practice in connection with modern calf breeding to separate the calves from the cow and to keep the calves in a separate calf stall where they are bred by means of fresh milk, stored milk and/or milk substitute from a liquid feed supply device. Such a liquid feed supply device may comprises a nipple enabling the calves to receive liquid feed by sucking. Although the calves may not meet the cow of theirs during their breeding period, such breeding management has proved to be successful over the years. It is important to keep the calves in such a stall separated from a herd of a great number of cows in order to avoid injuries on the calves.

Many milk producers of today have a problem to adapt the milk production to an optimal quantity from a market point of view. Due to common production allocation rules, the milk producers are given a relatively high price for the milk up to a certain milk quantity; when more milk is produced and delivered, the milk price decreases. In view of such a decreasing milk price, milk producers frequently have surplus of milk.

There has been investigations performed with regard to machine milking of cows and breeding of calves given access to the cows for the purpose of suckling. The fact that the cows and calves are brought together during at least a certain regular period of time is considered to have positive influence on the animal comfort, and the result of these investigations shows that the calf health was excellent.

Automatic milking of cows is disclosed in WO-A-96/19916 and WO-A-96/19917. It is known to perform such an automatic milking in a milking stall provided in a barn in which the animals are allowed to walk about freely and find their way individually to said milking stall and stalls for feeding and drinking. The cows are automatically identified in each stall and fed with the aid of a computer connected to the identification and feeding means used. By means of the computer, in which facts concerning each cow, when she was last milked, etc. are stored, automatic milking is initiated. The milking stall also comprises gates which are automatically closed to retain the cow during milking and opened to let the cow leave the milking stall.

The arrangement disclosed by WO96/19916 comprises a first area for receiving the animals, a milking station located in said area and having means for automatic milking of an animal present in the milking station. Moreover a separation area is provided for separating an animal which should be subjected to any kind of special treatment. The separation area is only accessible from the receiving area.

The arrangement disclosed by WO-A-96/19917 comprises a milking stall located in a receiving area and having an automatic milking machine. The milking stall comprises an entrance and an exit and is provided for housing one single animal. Enticing means is provided to entice the animal to approach or to leave the stall.

WO-A-90/03108 discloses a box for pigs having a gate which is openable by a sow but not by a sucking-pig. The gate is movable from a closed rest position in a direction perpendicular to the passage direction by a force of such a level that the gate may not be moved from the rest position by a small sucking-pig. Furthermore, a threshold is provided beneath the gate on such a height that a sucking-pig may not pass thereover.

### SUMMARY OF THE INVENTION

The object of the present invention is to provide an arrangement for housing a herd of animals including milk producing animals and milk consuming animals, which arrangement is adapted to remedy the problems discussed above.

This object is obtained by the arrangement initially defined and characterized by passage means provided to permit passage of said milk producing animal between the first area and the second area but prevent passage of said milk consuming animal from the second area to the first area. By such passages means, the milk producing animals may enter the second area of the milking consuming animals which then have access to the milk producing animals for suckling. The milk consuming animals are prevented from leaving their second area but the milk producing animals are free to leave the second area whenever they want. In the case of cows, it is considered that the calves may not suckle such milk quantities that the cows do not need to be milked regularly, and thus the cows will leave the second area at least when they need to be milked. The arrangement permits a cow entering the second area to be suckled by any calf in the second area, not only the calves of hers.

By such an arrangement an overall improved milk and beef productivity is obtained. Surplus of milk may be utilized for suckling of calves in an simple an natural manner. No complicated and expensive equipment is required for feeding the calves with milk from the cows.

According to an embodiment of the invention, a feed supply device is provided to be accessible for said milk consuming animal in said second area. Thereby, it is possible to provide supplementary feed to the calves. Advantageously, the feed supply device is arranged to offer liquid feed and comprises a nipple means enabling sucking of said liquid feed by said milk consuming animal. Sucking of liquid has proved to be advantageous for the comfort and the health of the calves. Furthermore, the liquid feed supply device is arranged to supply at least one of fresh milk, stored milk and milk substitute to said milk consuming animal.

According to further embodiment of the invention, the milking station comprises means arranged to perform automatic milking of said milk producing animal. It is considered that the combination of such a voluntary milking station and a voluntary suckling possibility is not only comfortable to the animals but also provides a production of milk and beef which may reach a high overall productivity. Thereby, enticing means may be provided to entice the milk producing animal to a desired destination in the first area. The enticing means may comprise a feeding device provided for offering feed to said milk producing animal. In order to improve the milking efficiency, the enticing means may be arranged to entice said milk producing animal to enter the milking station, and/or to entice said milk producing animal to leave the milking station.

According to a further embodiment of the invention, enclosure means defines said second area and comprises at least one gate device arranged to enable said passage of said milk producing animal. Such a gate device may comprise an structural element arranged on such a height in said passage that only an animal having a determined size may pass over this element. Furthermore, means may be arranged to identify an animal approaching said gate device and gate control means may be arranged to control the opening and closing of said gate device in response to the identification of said identifying means.

The object defined above is also obtained by the method initially defined and characterized by permitting said milk producing animal to pass into and out from the second area but preventing said milk consuming animal to pass from the second area to the first area.

### BRIEF DESCRIPTION OF THE DRAWINGS

The invention is now to be described by means of different embodiments and with reference to the accompanying drawings, in which
- Fig 1: shows a schematic view from above of an arrangement for managing a herd of animals,
- Fig 2: shows a front view of a gate device of the arrangement in Fig 1, and
- Fig 3: shows a schematic view from above of a second area of the arrangement in Fig 1 including gate devices of another embodiment.

### DETAILED DESCRIPTION OF DIFFERENT EMBODIMENTS OF THE INVENTION

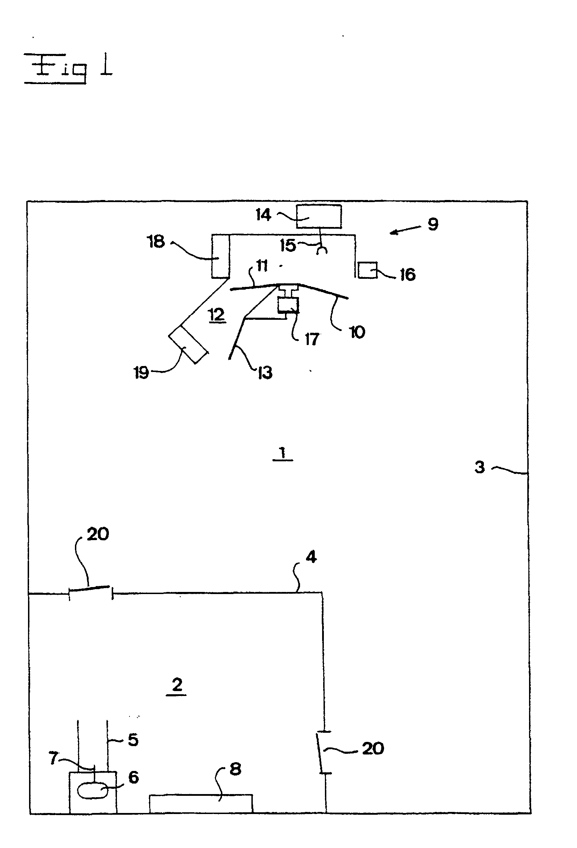

Fig 1 discloses an animal arrangement for housing a herd of animals including milk producing animals, in the following cows, and milk consuming animals, in the following calves. The arrangement comprises a first area 1 and a second area 2. The first area 1 is defined by first enclosure means 3 in the shape of a fence, a grid or the like, and the second area 2 is defined by a second enclosure means 4 in the shape of a further fence, a grid or the like. In the embodiment disclosed the second area 2 is arranged within the first enclosure means 3 defining the first area 1; however, it is possible in accordance with the present invention to arrange the second area 2 completely outside the first area 1. The first area 1 is arranged to house cows permitted to walk about freely in the first area 1. The second area is arranged to house calves permitted to walk about freely in the second area 2.

In the second area 2, there is provided a liquid feed stall 5 accessible to the calves. The stall 5 comprises a liquid feed supply device 6 arranged to offer liquid feed such as fresh milk, stored milk and/or milk substitute to the calves. The liquid feed supply device 6 comprises a nipple member, schematically indicated at 7 and enabling sucking of said liquid feed by the calves. The second area 2 may also comprise a feeding device 8 arranged to offer solid feed, such as concentrate and hay.

In the first area 1, there is provided a milking station 9 provided for voluntary milking of the freely walking cows, i.e. the cows enter the milking station 9 in order to be milked when they need to. The milking station 9 comprises an enclosure having an inlet gate 10 and an outlet gate 11. Outside the outlet gate 11 there may be an exit space 12 to be passed by the cow leaving the milking station. The exit space 12 comprises a further outlet gate 13. The milking station 9 comprises a milking machine (not disclosed) and an automatic handling device 14 having a robot arm 15 arranged to automatically apply teatcups of the milking machine to the teats of a cow present in the milking station 9. Furthermore, the milking station 9 may comprise an identification member 16 provided to identify a cow approaching the milking station 9. All of the gates 10, 11 and 13 are controllable by means of a schematically disclosed control device 17. Thus a cow approaching the milking station may be given access to the milking station after having been identified by the identification member 16 by opening of the inlet gate 10. After the milking has been completed the cow may leave the milking station 9 by opening of the outlet gates 11 and 13. The milking station 9 may also comprise a first feeding device 18 provided in the front end of the milking station 9 and a second feeding device 19 provided in the front end of the exit space 12. A purpose of the first feeding device 18 is to entice the cow to enter the milking station 9 and to make her stand still during at least the attachment of the teatcups and a purpose of the second feeding device 19 is to entice the cow to leave the milking station 9 after the milking has been finished or is interrupted for any reason.

It is to be noted that the cow may be enticed to enter and leave the milking station 9 by other enticing means than the feeding devices 18, 19 disclosed. In this connection reference is made to the above identified WO96/19917. Furthermore, it is to be noted that the first area 1 also may include separate feeding and liquid supply boxes as well as more than one single milking station 9.

According to the present invention passage means 20 are provided to permit passage of the cows between the first area 1 and the second area 2 but prevent passage of the calves from the second area 2 to the first area 1. Thus, it is possible for the cows to enter voluntarily the second area 2 so that the calves may have access to the cows. Consequently, by the arrangement according to the invention it is possible to breed calves not only by liquid feed supply devices, such as 6, but also by suckling.

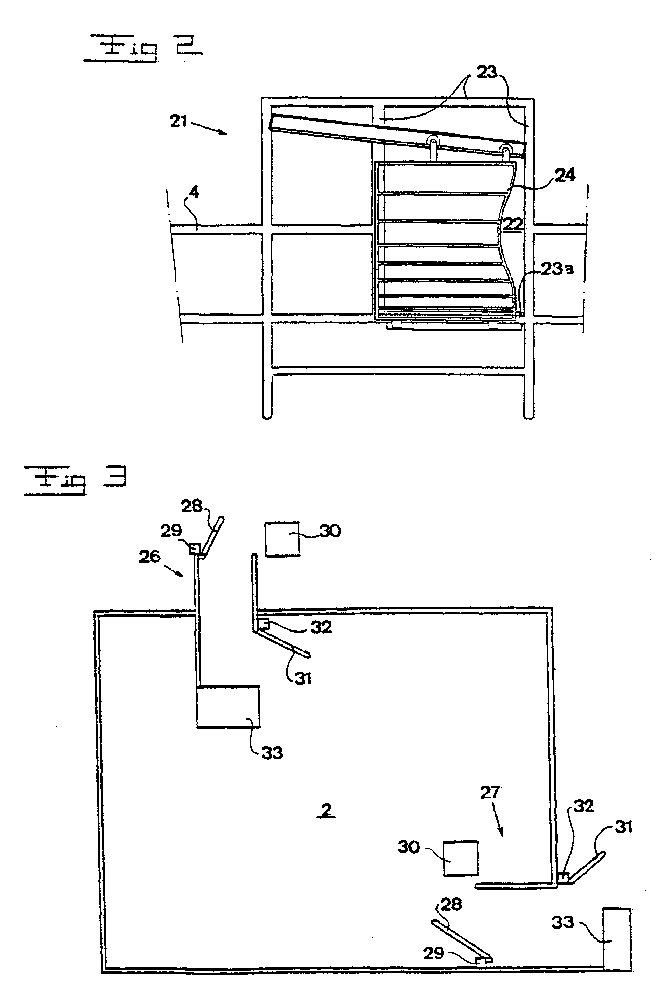

Such passage means 20 enabling passage of the cows but preventing passage of the calves may be constructed in a great number of different manners. Fig 2 and 3 discloses two different passage means operating in accordance with the present invention.

Fig 2 discloses a gate device 21 forming an opening 22 in the second enclosure means 4. The opening 22 is defined by structural bar elements 23 including a lower bar element 23a forming a threshold arranged on such a height in the gate device 21 that a cow easily may pass thereover but a calf is effectively hindered from such passage through the opening 22. Furthermore, the gate device 21 includes a gate 24 which is suspended in a rail provided across an upper portion of the opening 22 and slightly inclined towards one side of the opening 22. Thus, the gate 24 is movable across the opening 22 along the rail 25 and due to the inclination of the rail 25, the gate 24 will move to a rest position closing the opening 22. One side of the gate 24 comprises an inwardly directed curvature enabling for a cow to introduce her mouth between a lateral structural bar element 23 and the gate 24 and to force the gate 24 rearwardly, thereby enabling passage through the opening 22. The gate device 21 disclosed in Fig 2 functions in both directions, i.e. it permits passage in both directions for a cow and prevents passage in both directions for a calf.

Fig 3 discloses schematically the second enclosure means 4 defining the second area 2 and comprising a first inlet gate device 26 and a second outlet gate device 27. The gate devices 26 and 27 are constructed in a similar manner and are both intended to permit passage of a cow in one direction and prevent passage of a calf in said one direction. No passage is intended in the other opposite direction for any animal. The gate devices 26 and 27 comprise a first gate 28 operated by a drive member 29 which is intended to open the gate 28 in response to an identification of an animal approaching the gate device 26, 27 by means of an identification member 30. Thus, when a cow approaches the gate device 26, 27 the identification member 30 identifies the cow as an individual animal or recognizes that the animal is of a certain size. Thereafter, the identification member initiates opening of the gate 28 by means of the drive member 29. In order to prevent, in a safe manner, that no calves may pass the gate device 26 in the opposite direction, it may be designed as a sluice. Thereby, it may comprise a second gate 31 operated by a drive member 32 which is controlled to open the second gate 31 when a cow is present in the space between the first and the second gate 28, 29 and when the first gate 28 has been closed.

Furthermore, in order to entice a cow to enter the second area 2 and leave the second area 2, the first gate device 26 and the second gate device 27 may comprise an enticing means 33. This enticing means 33 may be a feeding device arranged to offer the cow concentrate.

The present invention is not limited to the embodiments disclosed herein but may be varied and modified within the scope of the following claims.

## Claims

1. An arrangement for housing a herd of animals including at least one milk producing animal and at least one milk consuming animal, the arrangement comprising a first area (1) provided to house said milk producing animal and a second area (2) being separated from the first area and provided to house said milk consuming animal, said first area comprising a milking station (9) provided for milking of said milk producing animal, **characterized by** passage means (20) provided to permit passage of said milk producing animal between the first area (1) and the second area (2) but prevent passage of said milk consuming animal from the second area (2) to the first area (1).

2. An arrangement according to claim 1, **characterized by** a feed supply device (6, 8) provided to be accessible for said milk consuming animal in said second area.

3. An arrangement according to claim 2, **characterized in that** the feed supply device (6) is arranged to offer liquid feed and comprises a nipple means (7) enabling sucking of said liquid feed by said milk consuming animal.

4. An arrangement according to any one of claims 2 and 3, **characterized in that** the liquid feed supply device (6) is arranged to supply at least one of fresh milk, stored milk and milk substitute to said milk consuming animal.

5. An arrangement according to any one of the preceding claims, **characterized in that** the milking station (9) comprises means (14, 15) arranged to perform automatic milking of said milk producing animal.

6. An arrangement according to claim 5, **characterized by** enticing means (18, 19) provided to entice the milk producing animal to a desired destination in the first area (1).

7. An arrangement according to claim 6, **characterized in that** the enticing means comprises a feeding device (18, 19) provided for offering feed to said milk producing animal.

8. An arrangement according to any one of claims 6 and 7, **characterized in that** the enticing means (18, 19) is arranged to entice said milk producing animal to enter the milking station (9).

9. An arrangement according to any one of claims 6 to 8, **characterized in that** the enticing means (18, 19) is arranged to entice said milk producing animal to leave the milking station (9).

10. An arrangement according to any on of the preceding claims, **characterized by** enclosure means (3, 4) defining said second area (2) and comprising at least one gate device (21, 26, 27) arranged to enable said passage of said milk producing animal.

11. An arrangement according to claim 10, **characterized in that** the gate device (21) comprises an structural element (23a) arranged on such a height in the passage means (20) that only an animal having a determined size may pass over this element (23a).

12. An arrangement according to any one of claims 10 and 11, **characterized by** means (30) arranged to identify an animal approaching said gate device (26, 27) and gate control means (29, 30, 32) arranged to control the opening and closing of said gate device (26, 27) in response to the identification of said identifying means (30).

13. A method of managing a herd of animals including at least one milk producing animal and at least one milk consuming animal, the method comprising
housing said milk producing animal in a first area,
performing milking of said milk producing animal in said first area, and
housing said milk consuming animal in a second area being separated from the first area,
**characterized by** permitting said milk producing animal to pass into and out from the second area but preventing for said milk consuming animal to pass from the second area to the first area.

14. A method according to claim 13, **characterized by** feeding said milk consuming animal in the second area.

15. A method according to any one of claims 13 and 14, **characterized by** automatically milking said milk producing animal in the first area.

## Patentansprüche

1. Einrichtung zum Verwalten einer Tierherde, die mindestens ein Milch produzierendes Tier sowie mindestens ein Mich verzehrendes Tier umfasst, wobei die Einrichtung einen ersten Bereich (1) umfasst, der zur Unterbringung des Milch produzierenden Tieres dient, sowie einen zweiten Bereich (2), der vom ersten Bereich getrennt ist und zur Unterbringung des Milch verzehrenden Tieres dient, wobei der erste Bereich eine Melkstation (9) zum Melken des Milch produzierenden Tieres umfasst, **dadurch gekennzeichnet, dass** Durchgangseinrichtungen (20) vorgesehen sind, die dem Milch produzierenden Tier einen Durchgang zwischen dem ersten Bereich (1) und dem zweiten Bereich (2) erlauben, jedoch einen Durchgang des Milch verzehrenden Tieres vom zweiten Bereich (2) zum ersten Bereich (1) verhindern.

2. Einrichtung nach Anspruch 1, **gekennzeichnet durch** eine Futterzufuhreinrichtung (6, 8), die für das Milch verzehrende Tier im zweiten Bereich zugänglich ist.

3. Einrichtung nach Anspruch 2, **dadurch gekennzeichnet, dass** die Futterzufuhreinrichtung (6) flüssiges Futter anbietet und eine Nippeleinrichtung (7) umfasst, die ein Saugen des flüssigen Futters durch das Milch verzehrende Tier ermöglicht.

4. Einrichtung nach einem der Ansprüche 2 und 3, **dadurch gekennzeichnet, dass** die Flüssigfutterzufuhreinrichtung (6) dem Milch verzehrenden Tier mindestens frische Milch, gelagerte Milch oder ein Milchsubstitut zuführt.

5. Einrichtung nach einem der vorangegangenen Ansprüche, **dadurch gekennzeichnet, dass** die Melkstation (9) eine Einrichtung (14, 15) umfasst, die zum Ausführen eines automatischen Melkens des Milch produzierenden Tieres dient.

6. Einrichtung nach Anspruch 5, **gekennzeichnet durch** eine Lockeinrichtung (18, 19), die das Milch produzierende Tier an einen gewünschten Ort im ersten Bereich (1) lockt.

7. Einrichtung nach Anspruch 6, **dadurch gekennzeichnet, dass** die Lockeinrichtung eine Fütterungsvorrichtung (18, 19) umfasst, die dem Milch produzierenden Tier Futter anbietet.

8. Einrichtung nach einem der Ansprüche 6 und 7, **dadurch gekennzeichnet, dass** die Lockeinrichtung das Milch produzierende Tier zum Eintreten in die Melkstation lockt.

9. Einrichtung nach einem der Ansprüche 6 bis 8, **dadurch gekennzeichnet, dass** die Lockeinrichtung (18, 19) zum Locken des Milch produzierenden Tieres aus der Melkstation (9) heraus dient.

10. Einrichtung nach einem der vorangegangenen Ansprüche, **gekennzeichnet durch** eine Umzäunungseinrichtung (3,4), die den zweiten Bereich (2) definiert und mindestens eine Torvorrichtung (21,26,27) umfasst, die den Durchgang des Milch produzierenden Tieres ermöglicht.

11. Einrichtung nach Anspruch 10, **dadurch gekennzeichnet, dass** die Torvorrichtung (21) ein strukturelles Element (23a) umfasst, das in einer solchen Höhe in der Durchgangseinrichtung (20) angeordnet ist, dass nur ein Tier mit einer bestimmten Größe über dieses Element (23a) steigen kann.

12. Einrichtung nach einem der Ansprüche 10 und 11, **gekennzeichnet durch** eine Einrichtung (30), die zum Identifizieren eines Tieres dient, das sich der Torvorrichtung (26, 27) nähert, und eine Torsteuereinrichtung (29, 30, 32), die zum gesteuerten Öffnen und Schließen der Torvorrichtung (26, 27) in Reaktion auf die Identifikation **durch** die Identifiziervorrichtung (30) dient.

13. Verfahren zum Verwalten einer Tierherde, die mindestens ein Milch produzierendes Tier und mindestens ein Milch verzehrendes Tier umfasst, wobei die Methode die folgenden Schritte umfasst:
Unterbringen des Milch produzierenden Tieres in einem ersten Bereich, Durchführen des Melkens des Milch produzierenden Tieres im ersten Bereich und
Unterbringen des Milch verzehrenden Tieres in einem zweiten Bereich, der von dem ersten Bereich getrennt ist,
**dadurch gekennzeichnet, dass** es dem Milch produzierenden Tier erlaubt ist, sich in den zweiten Bereich hinein und aus ihm heraus zu bewegen, es jedoch dem Milch verzehrenden Tier versagt ist, sich vom zweiten Bereich in den ersten Bereich zu bewegen.

14. Verfahren nach Anspruch 13, **dadurch gekennzeichnet, dass** das Milch verzehrende Tier im zweiten Bereich gefüttert wird.

15. Verfahren nach einem der Ansprüche 13 und 14, **gekennzeichnet durch** ein automatisches Melken des Milch produzierenden Tieres im ersten Bereich.

## Revendications

1. Agencement pour recevoir un troupeau d'animaux comprenant au moins un animal produisant du lait et au moins un animal consommant du lait, l'agencement comprenant une première zone (1) prévue pour recevoir ledit animal producteur de lait et une seconde zone (2) séparée de la première zone et prévue pour recevoir ledit animal consommateur de lait, ladite première zone comprenant un poste de traite (9) prévu pour traire ledit animal producteur de lait, **caractérisé par** un moyen de passage (20) prévu pour permettre le passage dudit animal producteur de lait entre la première zone (1) et la seconde zone (2) mais pour empêcher le passage dudit animal consommateur de lait de la seconde zone (2) à la première zone (1).

2. Agencement selon la revendication 1, **caractérisé par** un dispositif d'alimentation (6, 8) prévu pour être accessible pour ledit animal consommateur de lait dans ladite seconde zone.

3. Agencement selon la revendication 2, **caractérisé en ce que** le dispositif d'alimentation (6) est prévu pour offrir une alimentation liquide et comprend un système de mamelon (7) permettant l'aspiration de ladite alimentation liquide par ledit animal consommateur de lait.

4. Agencement selon l'une des revendications 2 et 3, **caractérisé en ce que** le dispositif d'alimentation en liquide (6) est prévu pour fournir au moins du lait frais, ou du lait stocké ou un substitut de lait audit animal consommateur de lait.

5. Agencement selon l'une des précédentes revendications, **caractérisé en ce que** le poste de traite (9) comprend un moyen (14, 15) prévu pour réaliser la traite automatique dudit animal producteur de lait.

6. Agencement selon la revendication 5, **caractérisé par** un moyen incitateur (18, 19) prévu pour inciter l'animal producteur de lait vers une destination souhaitée dans la première zone (1).

7. Agencement selon la revendication 6, **caractérisé en ce que** le moyen incitateur comprend un dispositif d'alimentation (18, 19) prévu pour proposer une alimentation audit animal producteur de lait.

8. Agencement selon l'une des revendications 6 et 7, **caractérisé en ce que** le moyen incitateur (18, 19) est agencé pour inciter ledit animal producteur de lait à pénétrer dans le poste de traite (9).

9. Agencement selon l'une des revendications 6 à 8, **caractérisé en ce que** le moyen incitateur (18, 19) est disposé pour inciter ledit animal producteur de lait à quitter le poste de traite (9).

10. Agencement selon l'une des précédentes revendications, **caractérisé par** un moyen de clôture (3, 4) définissant ladite seconde zone (2) et comprenant au moins un système de porte (21, 26, 27) prévu pour permettre ledit passage dudit animal producteur de lait.

11. Agencement selon la revendication 10, **caractérisé en ce que** le système de porte (21) comprend un élément structurel (23a) prévu à une hauteur telle dans le moyen de passage (20) que seul un animal ayant une taille déterminée puisse franchir cet élément (23a).

12. Agencement selon l'une des revendications 10 et 11, **caractérisé par** un moyen (30) prévu pour identifier un animal approchant dudit système de porte (26, 27) et moyen de commande de porte (29, 30, 32) prévu pour commander l'ouverture et la fermeture dudit système de porte (26, 27) en réponse a l'identification dudit moyen d'identification (30).

13. Procédé pour traiter un troupeau d'animaux comprenant au moins un animal producteur de lait et au moins un animal consommateur de lait, la méthode comprenant
la réception dudit animal producteur de lait dans une première zone,
la réalisation de la traite dudit animal producteur de lait dans ladite première zone, et
la réception dudit animal consommateur de lait dans une seconde zone séparée de la première zone,
**caractérisé par** l'autorisation dudit animal producteur de lait à entrer et sortir de la seconde zone mais par l'empêchement pour ledit animal consommateur de lait de passer de la seconde zone à la première zone.

14. Procédé selon la revendication 13, **caractérisé par** l'alimentation dudit animal consommateur de lait dans la seconde zone.

15. Procédé selon l'une des revendications 13 et 14 **caractérisé par** la traite automatique dudit animal producteur de lait dans la première zone.
